# EUROPEAN PATENT SPECIFICATION

(11) **EP 2 837 519 B1**
(45) Date of publication and mention of the grant of the patent: **25.07.2018**
(21) Application number: 13775177.2
(22) Date of filing: 21.03.2013
(51) Int. Cl.: B60K 15/077, F02M 37/00

(54) **VEHICLE FUEL TANK**
FAHRZEUGBRENNSTOFFTANK
RÉSERVOIR DE CARBURANT DE VÉHICULE

(30) Priority: 10.04.2012 JP 2012089200
(43) Date of publication of application: 18.02.2015
(73) Proprietor: Mitsubishi Jidosha Kogyo Kabushiki Kaisha, Tokyo 108-8410 (JP); Mitsubishi Jidosha Engineering Kabushiki Kaisha, Aichi 444-8501 (JP)
(72) Inventor: IWAYA, Norifumi, Tokyo 108-8410 (JP); KAGEYAMA, Hiroaki, Tokyo 108-8410 (JP); SANO, Takayuki, Tokyo 108-8410 (JP); KUNII, Kenichi, Okazaki-shi Aichi 4448501 (JP)
(74) Representative: Vossius & Partner Patentanwälte Rechtsanwälte mbB
(86) International application number: PCT/JP2013/058063
(87) International publication number: WO 2013/153929

(56) References cited:
- EP-A2- 1 714 820
- GB-A- 2 374 056
- JP-A- H0 434 443
- JP-A- H06 144 030
- JP-A- H06 144 030
- JP-U- S5 469 212
- JP-U- S6 367 330
- JP-U- S56 172 429
- KR-A- 20100 051 417
- US-A1- 2003 015 537

## Description

### Technical Field

The present invention relates to a vehicle fuel tank and particularly relates to improvement of a structure for suppressing a flow noise of fuel.

### Background Art

In a fuel tank mounted on an automobile (vehicle), fuel stored therein can easily flow, and the fuel flows in the tank and collides against an inner surface of the fuel tank or the fuel bounced back by the inner surface collides against the stored fuel at start or acceleration/deceleration during traveling, which can easily cause disturbing flow noises.

In the fuel tank, in order to reduce this flow noise, flow energy of the fuel is to be reduced by using a baffle body. For such reduction of the flow energy, a method of forming a chamber space holding the fuel in the fuel tank so as to make the fuel difficult to move is employed in many cases.

Conventionally, as such chamber space for making the fuel difficult to move, a structure of forming the chamber space as a closed space in which the inner wall of the tank body of the fuel tank is formed as it is as a wall portion of the chamber space is employed by using a baffle plate and an inner wall of a tank body of the fuel tank as disclosed in FIG. 6 of Japanese Patent Laid-Open No. 2007-307918, and the fuel is surrounded by the chamber space so as to make the fuel difficult to move and to suppress the flow energy colliding against the inner wall of the tank body. It is needless to say that the stored fuel can flow in/out of the chamber space.

Generic JP H06 144030 A discloses a fuel tank having a closed space defined by a lower case and an upper case, wherein partition plates with a plurality of communication holes and a sub-tank 7 are provided in the closed space.

GB 2 374 056 A relates to an impact and/or explosion resistant insert for a fuel tank comprising a matrix of rigid cells with voids that allow storage of liquid fuel. The matrix may prevent rupture of a fuel tank during an impact or may be progressively and irreversibly crushed when subjected to a sufficiently large impact, thereby absorbing energy and also reducing the risk of igniting fuel released from the cells to the air.

EP 1 714 820 A2 relates to a noise suppressing device attachable to a wall within a liquid container. The device has a main plate body with an upper plate surface and a lower plate surface, through holes extending through the upper and lower plate surfaces for permitting flow of the liquid from one side of the main plate body to the other side of the main plate body, and projections formed on the main plate body. Each projection has a base and a tip, and is tapered from the base to the tip. The noise suppressing device also has an attachment device for attaching the main plate body to the container wall.

US 2003/0015537 A1 discloses a baffle unit for operative cross mounting within a liquid fuel tank of an automotive vehicle to attenuate wave action of the liquid fuel within the tank during vehicle operation. The baffle unit comprises a frame with latticed work defining open side faces encapsulating a mat of fiberglass filaments caged therein and having a porosity for the passage of waves of liquid fuel therethrough. The frame is supported for telescoping action in a carrier. Helical end springs urge the frame to an outer position against the interior walls of the tank after the unit is compressed to collapse the unit to allow its easy insertion into the tank.

KR 2010 0051417 A relates to a baffle unit for a fuel tank of a vehicle. The baffle unit comprises a reserve box which is installed in the longitudinal direction of a lower plate of the fuel tank. The lower part of a fuel pump module which is installed on the upper plate of the fuel tank is inserted, and a baffle member which is placed at both sides of the reserve box to the longitudinal direction of the fuel tank and is respectively installed on the upper plate of the fuel tank. The baffle member comprises a plurality of fuel flow holes.

### Summary of the Invention

### Problems to be solved by the Invention

However, that structure also has a problem. That is, the wall portion of the tank body constitutes a wall portion of the chamber space. Thus, a noise caused by the fuel moving in the chamber space and the flow noise generated when the fuel collides are directly transmitted to the wall portion of the tank body and leaks out of the tank body and can cause a factor of noises.

Thus, an object of the present invention is to provide a vehicle fuel tank which suppresses leakage of the flow noise of the fuel in the chamber space of the baffle body to the outside of the fuel tank.

### Means for Solving the Problems

The present invention is defined by the features of claim 1. Embodiments of the invention are recited in the dependent claims. A vehicle fuel tank described in claim 1 employs a structure in which a chamber space into/out of which stored fuel can flow is formed at a point away from an inner surface of a tank body for a baffle body in order to achieve the above described object.

The chamber space of the baffle body may be configured to occupy the most from a lower limit position to a full amount position of a fuel amount which can be stored in the fuel tank.

The chamber space may be configured to form a closed section by using a baffle plate member as a wall portion.

The chamber space may be configured to be formed having at least two inclined surfaces which are narrowed as they go toward the inner surface of the tank body and a wall portion having a corner portion on a tip end side formed by intersection of the inclined surfaces.

### Advantageous Effects of the Invention

According to the invention, since the chamber space is located away from the inner surface of the tank body, not only that the flow energy colliding against the inner wall of the tank body is suppressed, but also that the flow noise of the fuel in the chamber space of the baffle body can be configured not to be directly transmitted to the tank body.

Thus, the flow noise leaking from the fuel tank is suppressed, and reduction of the noise can be realized.

The flow noise leaking from the fuel tank can be suppressed in any stored amount of the fuel.

Furthermore, the chamber space can be formed with a simple structure.

Additionally, the fuel bounced back from the inner surface of the tank body due to start and acceleration/deceleration or the like is diffused while being cut off by the corner portion and the inclined surface. Thus, the flow noise caused by the fuel bounced back from the inner surface of the tank body can be suppressed, and the flow noise of the fuel tank can be effectively reduced.

Advantageously, alleviation of the flow energy by the baffle plate member for support is added to alleviation of the flow energy by the chamber space, and reduction of the flow noise can be further realized.

### Brief Description of the Drawings

FIG. 1 is a partially cut-away perspective view of a vehicle fuel tank according to an embodiment of the present invention illustrated together with a baffle body attached to the tank.
FIG. 2 is a sectional view of the vehicle fuel tank along A-A line in FIG. 1.
FIG. 3 is a perspective view illustrating a chamber space structure of the baffle body.
FIG. 4 is an exploded perspective view of the baffle body.

### Mode for Carrying out the Invention

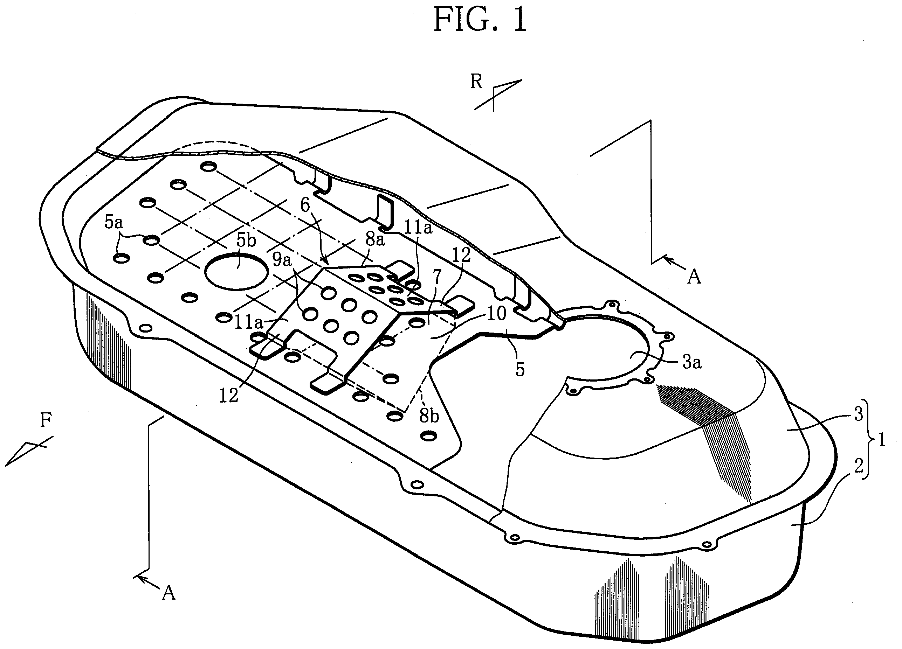

The present invention will be explained below on the basis of an embodiment illustrated in FIGS. 1 to 4.

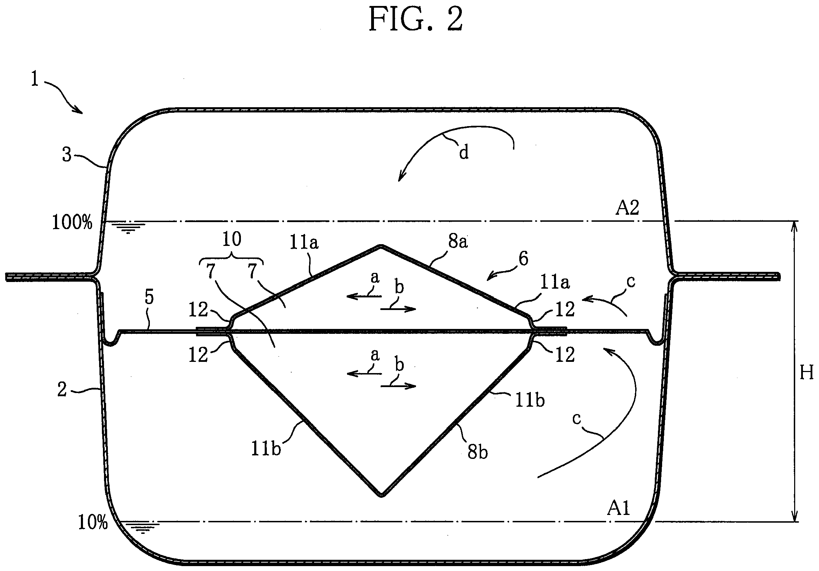

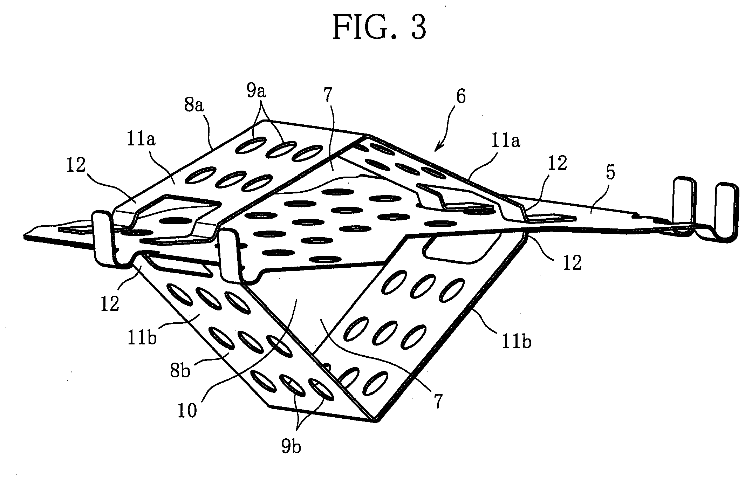

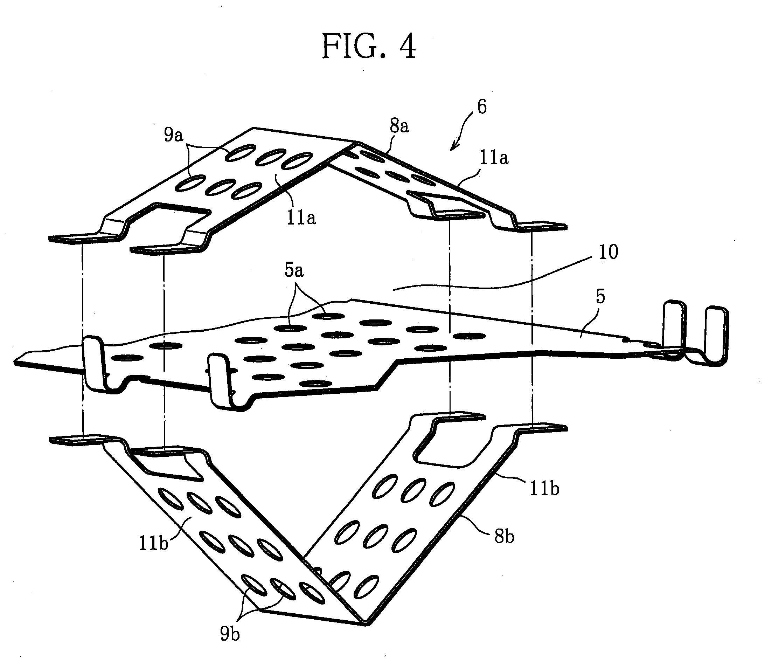

FIG. 1 illustrates an entire structure of a vehicle fuel tank (hereinafter referred to simply as a fuel tank) mounted below a floor of an automobile, for example, FIG. 2 illustrates a section along A-A line of the fuel tank, and FIGS. 3 and 4 illustrate a structure of a baffle body incorporated in the fuel tank. Reference character F in FIG. 1 denotes a front side of the vehicle, while reference character R denotes a rear side of the vehicle.

A structure of the fuel tank will be explained. Reference numeral 1 in FIG. 1 denotes a tank body of the fuel tank. The tank body 1 is formed by joining a lower tank 2 and an upper tank 3. The tank body 1 has a box shape in which a vehicle-width direction is long and a longitudinal direction of the vehicle is shorter than the vehicle-width direction, for example. A fuel pump module for supplying fuel to an engine (none of them is shown) is installed on one side in the vehicle-width direction of the tank body 1. A hole portion 3a on the one side in the vehicle-width direction of the upper tank 3 indicates a hole portion through which the fuel pump module goes in/out. A fuel-supply pipe member (not shown) for leading supplied fuel to the tank body 1 is connected to the opposite side, and the fuel is stored inside the tank body 1.

On the one side in the tank body 1 which avoids the fuel pump module, for example, a flat plate-shaped baffle plate member 5 (corresponding to a baffle plate for support of the present application) is provided so as to cross an inside of the tank body 1 as also illustrated in FIG. 2. This baffle plate member 5 is made of a flat plate-shaped plate in which a large number of through holes 5a are drilled. This baffle plate member 5 is arranged so as to vertically cross the space on a middle stage in the tank body 1. Moreover, a through hole 5b through which a fuel-supply pipe member passes is formed in a plate portion on a side opposite to the hole portion 3a of the baffle plate member 5.

On a region of the baffle plate member 5 which avoids a portion to become an obstacle such as the fuel-supply pipe member, the fuel pump module and the like, that is, a region from the center to the one side, for example, a baffle body 6 which is an essential part of the present invention is provided. The baffle body 6 is formed by a three-dimensional object (structure) forming a chamber space 10 holding the stored fuel without using a wall portion of the tank body 1 as illustrated in FIGS. 1 and 2.

Here, the baffle body 6, for example, uses a structure in which a pair of bent baffle plate members 8a and 8b each being bent into a mountain shape are assembled onto upper and lower surfaces of the baffle plate member 5 as illustrated in FIGS. 3 and 4 so as to form the chamber space 10 as a closed section at a point away from the inner surface of the tank body 1.

Specifically, for the bent baffle plate members 8a and 8b, baffle plate members both having mountain shapes and through holes 9a and 9b on the wall surface are used. The chamber space 10 uses a structure in which these baffle plate members are attached to upper and lower surface portions of the baffle plate member 5 in an attitude with an axial direction directed to a vehicle-width direction and opening sides facing each other vertically (faced attitude) as illustrated in FIG. 4. Thus, a chamber space portion 7 having a triangular cylindrical shape with a vehicle-longitudinal direction becoming a closed space, respectively, is formed in a region surrounded by the baffle plate member 5 and the bent baffle plate members 8a and 8b. The chamber space 10 is formed of a space having a diamond-shaped section obtained by combining these two chamber space portions 7 and 7. In this way, the chamber space 10 is formed at the point away from the entire inner surface of the tank body 1. This chamber space 10 is supported by using the baffle plate member 5 crossing inside the tank body 1 described above as a supporting member. That is, the chamber space 10 is installed in the tank body 1 with a structure not using the wall portion of the tank body 1 as a side like conventional ones.

This chamber space 10 is, as illustrated in FIG. 2, arranged in the tank body 1 so as to occupy a horizontal direction inside the tank body as much as possible. The upper bent baffle plate member 8a forming the chamber space 10 in that extends to the vicinity of a full amount position A2 of the fuel tank, while the lower bent baffle plate member 8b extends to the vicinity of a lower limit position A1 of the fuel tank, and the chamber space 10 is arranged so as to occupy the most of a tank region H from the lower limit position A1 at which the fuel can be stored to the full amount position A2 of the fuel tank. Thus, it is so configured that the fuel can be held by the chamber space 10 in any stored state so that the fuel is made difficult to move in any state.

Moreover, the wall portions on the both sides in the vehicle longitudinal direction of the chamber space 10 and the upper side form a structure which can diffuse the fuel bounced back from the inner surface of the tank body 1 using the diamond sectional shape. That is, on the wall portions on the both sides in the vehicle longitudinal direction of the chamber space 10 and the upper side, two inclined surfaces 11a and 11b narrowed to each other as they go toward the inner surface of the tank body 1 and forming a diffusion portion, and a corner portion 12 formed at a portion where tip end portions of the inclined surfaces 11a and 11b intersect each other are formed by using the diamond sectional structure. That is, the structure is configured such that the corner portion 12 cuts off the fuel bounced back from the inner surface of the tank body 1 and the cut-off fuel is diffused by the inclined surfaces 11a and 11b.

According to the fuel tank configured as above, the fuel in the tank body 1 which is to flow upon behavior such as start of the vehicle or acceleration/deceleration during traveling as indicated by arrows a and b in FIG. 2, for example, is held in the chamber space 10 of the baffle body 6 and thus, it is difficult to move, and flow of the fuel is suppressed. The flow energy of the fuel is suppressed by this suppression.

At this time, since the chamber space 10 is arranged away from the entire inner surface of the tank body 1, the fuel in the chamber space 10 does not directly collide against the inner wall of the tank body 1. Thus, the flow noise caused by the collision is not directly transmitted to the wall surface of the tank body 1.

That is, by providing the chamber space 10 away from the entire inner surface of the tank body 1, not only the flow energy is suppressed but also the flow noise of the fuel in the chamber space 10 is kept from being directly transmitted to the tank body.

Thus, the flow noise leaking from the fuel tank can be suppressed, and the noise generated in the fuel tank can be reduced. Particularly, since the chamber space 10 of the baffle body 6 is arranged so as to occupy the most from the lower limit position A1 to the full amount position A2 of the fuel amount, the flow noise leaking from the fuel tank can be suppressed under any fuel stored amount.

Moreover, the chamber space 10 can be obtained only by forming a closed section by using the bent baffle plate members 8a and 8b as the wall portions, which is a simple structure.

Furthermore, by forming the wall portions of the chamber space 10, that is, by forming the wall portions on the both sides in the longitudinal direction and the upper side, here, by the wall portion having the two inclined surfaces 11a and 11b narrowed to each other as they go toward the inner surface of the tank body 1 and the corner portion 12 on the tip end side, the fuel bounced back from the inner surfaces of a side wall and an upper wall of the tank body 1 as indicated by arrows c and d in FIG. 2 has the flow energy suppressed by the behavior that the fuel is cut off by the corner portion 12 and diffused on the inclined surfaces 11a and 11b at start and acceleration/deceleration of the vehicle and the like. Thus, the flow noise caused by the fuel bounced back from the inner surface of the tank body 1 can be suppressed, and the flow noise of the fuel tank can be effectively reduced.

Particularly, if the baffle body 6 is supported by the tank body 1 by using the baffle plate member 5 forming the baffle plate for support, alleviation of the flow energy generated by the baffle plate member 5 is added to the alleviation of the flow energy generated by the chamber space 10, and the flow noise is further reduced.

The present invention is not limited to the above described embodiment but may be variously varied in practice within a range not departing from the scope of the present invention as defined in the claims. For example, in the embodiment, a diamond shape combining triangular cylindrical shape is employed as the shape of the chamber space, but this is not limiting, and other shapes such as a square cylinder, a triangular cylinder or more polygonal cylinder and the like may be employed. It is needless to say that the chamber space does not have to be cylindrical and the periphery of a space may be fully closed, and the number does not have to be one but may be plural. In short, it is only necessary to form the chamber space without using the inner surfaces of the tank body. Moreover, the number of the inclined surfaces which diffuse the fuel while cutting it off does not have to be two but more inclined surfaces may be used for diffusion.

Moreover, in the embodiment, the fuel tank having a box shape extending uniformly in the vehicle-width direction is cited, but this is not limiting, and the fuel tank having a saddle shape may be similarly cited.

### Explanation of Reference Signs

1 tank body
5 baffle plate member (baffle plate member for support)
6 baffle body
7 chamber space portion
8a, 8b bent baffle plate member (baffle plate member)
10 chamber space
11a, 11b inclined surface
12 corner portion

## Claims

1. A vehicle fuel tank having a tank body (1) mountable on a vehicle and storing fuel and a baffle body (6) disposed in the tank body, wherein
the baffle body has baffle plate members (8a, 8b) and a baffle plate member for support (5) that supports the baffle plate members on the tank body, a chamber space (10) in/out of which stored fuel in the tank body can flow is formed by the baffle plate members and the baffle plate member for support, and the chamber space is arranged at a point away from an inner surface of the tank body, **characterized in that** the baffle plate members are assembled onto upper and lower surfaces of the baffle plate member for support (5) each being bent into a mountain shape.

2. The vehicle fuel tank according to claim 1, wherein
the chamber space (10) occupies the most from a lower limit position to a full amount position of a fuel amount that can be stored in the fuel tank.

3. The vehicle fuel tank according to any one of claims 1 to 2,
wherein
the baffle plate members (8a, 8b) face each other vertically and have at least two inclined surfaces (11a, 11b) whose distance to each other is narrowed as they go toward the inner surface of the tank body (1) and form a corner portion (12) on a tip end side formed on a portion where tip end portions of the inclined surfaces intersect through the baffle plate member for support (5).

4. Vehicle comprising a vehicle fuel tank according to any one of claims 1 to 3, wherein
the tank body (1) has a box shape with a longer side and a shorter side, wherein the longer side is mounted to the vehicle in a vehicle-width direction.

5. Vehicle comprising a vehicle fuel tank according to claim 3, wherein
inclined surfaces (11a, 11b) of the baffle plate members (8a, 8b) are formed in the longitudinal direction of the vehicle.

## Patentansprüche

1. Fahrzeugkraftstofftank mit einem Tankkörper (1), der an einem Fahrzeug anbaubar ist und Kraftstoff lagert, und einem Prallkörper (6), der im Tankkörper angeordnet ist, wobei
der Prallkörper Prallplattenteile (8a, 8b) und ein stützendes Prallplattenteil (5) hat, das die Prallplattenteile am Tankkörper stützt, ein Kammerraum (10), in den/aus dem gelagerter Kraftstoff im Tankkörper strömen kann, durch die Prallplattenteile und das stützende Prallplattenteil gebildet ist und der Kammerraum an einem Punkt angeordnet ist, der von einer Innenfläche des Tankkörpers entfernt ist,
**dadurch gekennzeichnet, dass** die Prallplattenteile auf einer Ober- und einer Unterseite des stützenden Prallplattenteils (5) angebaut sind, wobei jedes bergförmig gebogen ist.

2. Fahrzeugkraftstofftank nach Anspruch 1, wobei
der Kammerraum (10) den Großteil von einer Untergrenzenposition bis zu einer Vollmengenposition einer Kraftstoffmenge belegt, die im Kraftstofftank gelagert werden kann.

3. Fahrzeugkraftstofftank nach Anspruch 1 oder 2, wobei
die Prallplattenteile (8a, 8b) vertikal zueinander weisen und mindestens zwei geneigte Oberflächen (11a, 11b) haben, deren Abstand zueinander sich mit Annäherung an die Innenfläche des Tankkörpers (1) verengt und die einen Eckenabschnitt (12) an einer Spitzenendseite bilden, die an einem Abschnitt gebildet ist, an dem Spitzenendabschnitte der geneigten Oberflächen das stützende Prallplattenteil (5) schneiden.

4. Fahrzeug, das einen Fahrzeugkraftstofftank nach einem der Ansprüche 1 bis 3 aufweist, wobei
der Tankkörper (1) eine Kastenform mit einer längeren Seite und einer kürzeren Seite hat, wobei die längere Seite am Fahrzeug in Fahrzeugbreitenrichtung angebaut ist.

5. Fahrzeug, das einen Fahrzeugkraftstofftank nach Anspruch 3 aufweist, wobei geneigte Oberflächen (11a, 11b) der Prallplattenteile (8a, 8b) in Längsrichtung des Fahrzeugs ausgebildet sind.

## Revendications

1. Réservoir de carburant de véhicule comprenant un corps de réservoir (1) pouvant être monté sur un véhicule et stockant du carburant et un corps de déflecteur (6) disposé dans le corps de réservoir, dans lequel
le corps de déflecteur a des éléments formant plaque de déflecteur (8a, 8b) et un élément de support formant plaque de déflecteur (5) qui supporte les éléments formant plaque de déflecteur sur le corps de réservoir, un espace formant chambre (10) dans/hors duquel du carburant stocké dans le corps de réservoir peut circuler est formé par les éléments formant plaque de déflecteur et l'élément de support formant plaque de déflecteur, et l'espace formant chambre est agencé au niveau d'un point à distance d'une surface interne du corps de réservoir,
**caractérisé en ce que** les éléments formant plaque de déflecteur sont assemblés sur des surfaces supérieure et inférieure de l'élément de support formant plaque de déflecteur (5), chacun étant courbé en une forme de montagne.

2. Réservoir de carburant de véhicule selon la revendication 1, dans lequel l'espace formant chambre (10) occupe la plus grande partie d'une position de limite inférieure à une position de quantité complète d'une quantité de carburant qui peut être stockée dans le réservoir de carburant.

3. Réservoir de carburant de véhicule selon l'une quelconque des revendications 1 à 2, dans lequel
les éléments formant plaque de déflecteur (8a, 8b) se font face dans le sens vertical et ont au moins deux surfaces inclinées (11a, 11b) dont la distance l'une par rapport à l'autre est réduite à mesure qu'ils se déplacent vers la surface inférieure du corps de réservoir (1) et forment une partie en coin (12) sur un côté d'extrémité en bout formé sur une partie où des parties d'extrémité en bout des surfaces inclinées se croisent à travers l'élément de support formant plaque de déflecteur (5).

4. Véhicule comprenant un réservoir de carburant de véhicule selon l'une quelconque des revendications 1 à 3, dans lequel
le corps de réservoir (1) a une forme de boîte avec un côté plus long et un côté plus court, dans lequel le côté plus long est monté sur le véhicule dans une direction de largeur de véhicule.

5. Véhicule comprenant un réservoir de carburant de véhicule selon la revendication 3, dans lequel
des surfaces inclinées (11a, 11b) des éléments formant plaque de déflecteur (8a, 8b) sont formées dans la direction longitudinale du véhicule.
